Europäisches Patentamt

European Patent Office

Office européen des brevets

(11) Publication number: **0 249 354**

**A1**

## (12) EUROPEAN PATENT APPLICATION

(21) Application number: 87304567.8

(22) Date of filing: 22.05.87

(51) Int. Cl.³: **H 01 R 11/28**
**H 01 M 2/30**

(30) Priority: 06.06.86 GB 8613736

(43) Date of publication of application:
16.12.87 Bulletin 87/51

(84) Designated Contracting States:
BE FR IT NL

(71) Applicant: LUCAS INDUSTRIES public limited company
Great King Street
Birmingham, B19 2XF West Midlands(GB)

(72) Inventor: Elwell, Michael John
3 Haslucks Croft
Solihull West Midlands B90 2EG(GB)

(74) Representative: Carpenter, David et al,
MARKS & CLERK Alpha Tower Suffolk Street Queensway
Birmingham B1 1TT(GB)

(54) Electric storage batteries.

(57) An electric storage battery having output terminals (12, 13) in the form of posts and conforming to a first standard, and sleeves (21) fitted to the terminal posts in a removable manner, said sleeves increasing the effective dimensions of their respective posts to conform to a second standard.

FIG.3.

EP 0 249 354 A1

Croydon Printing Company Ltd.

## ELECTRIC STORAGE BATTERIES

This invention relates to electric storage batteries primarily for use as S.L.I. (starting, lighting, ignition) batteries for road vehicles.

A well known, and widely used form of S.L.I. battery has positive and negative output terminals in the form of frusto-conical posts protruding from the top surface of the battery. The electrical system of the vehicle within which the battery is intended to be used incorporates leads of heavy current carrying capacity fitted with connectors shaped and dimensioned to mate with the battery terminal posts. There are basically two standards currently in use. The so-called "European" standard employs posts, and therefore connectors, of a first predetermined root diameter and taper angle, whereas the so-called "Japanese" standard uses posts, and corresponding connectors, of a second, smaller root diameter, but having the same taper angle as the "European" standard.

Certain batteries within a manufacturer's range of batteries may have an appropriate physical size and electrical performance to suit both the European market and the Japanese market, but of course in order to accommodate the different connector sizes fitted to the vehicles in the two markets it has been necessary to produce two battery styles differing only in their terminal posts. It is an object of the present invention to minimise this problem.

In accordance with the present invention there is provided an electric storage battery having output terminals in the form of posts and conforming with a first predetermined dimensional standard, said terminals being equipped with removable, electrically conductive, adaptor sleeves,the adaptor sleeves when in place on the terminal posts, defining with the terminal posts battery output terminals conforming to a second predetermined dimensional standard.

It will be recognised that in a battery as specified in the preceding paragraph the terminal posts without the adaptor sleeves may conform to the "Japanese" standard so as to mate with "Japanese" standard connectors, whereas when the posts carry the adaptor sleeves the adaptor sleeves increase the effective dimensions of the terminal posts so as to conform to connectors in accordance with the "European" standard. It will be recognised however that where other standards exist it may be possible to produce terminal posts and adaptor sleeves to accommodate such other standards.

Preferably each adaptor sleeve is formed with a longitudinally extending split to allow the sleeve to be expanded thereby facilitating removal of the sleeve from a respective terminal post.

The invention further resides in an adaptor sleeve for use with a battery as specified above. The invention still further resides in the combination of a battery as specified above, the terminal posts of which are equipped with adaptor sleeves, and connectors electrically connected to respective leads, and engaging respective terminal posts equipped with the adaptor sleeves.

One example of the invention is illustrated in the accompanying drawings wherein

Figure 1 is a perspective view of a conventional S.L.I. electric storage battery,

Figure 2 is a perspective view of a conventional connector engaged with the terminal post of a battery of the kind illustrated in Figure 1,

Figure 3 is an exploded view illustrating a terminal post and its respective adaptor sleeve,

Figure 4 is an end view of the adaptor sleeve of Figure 3, and

Figure 5 is a sectional view on the line 5-5 in Figure 4.

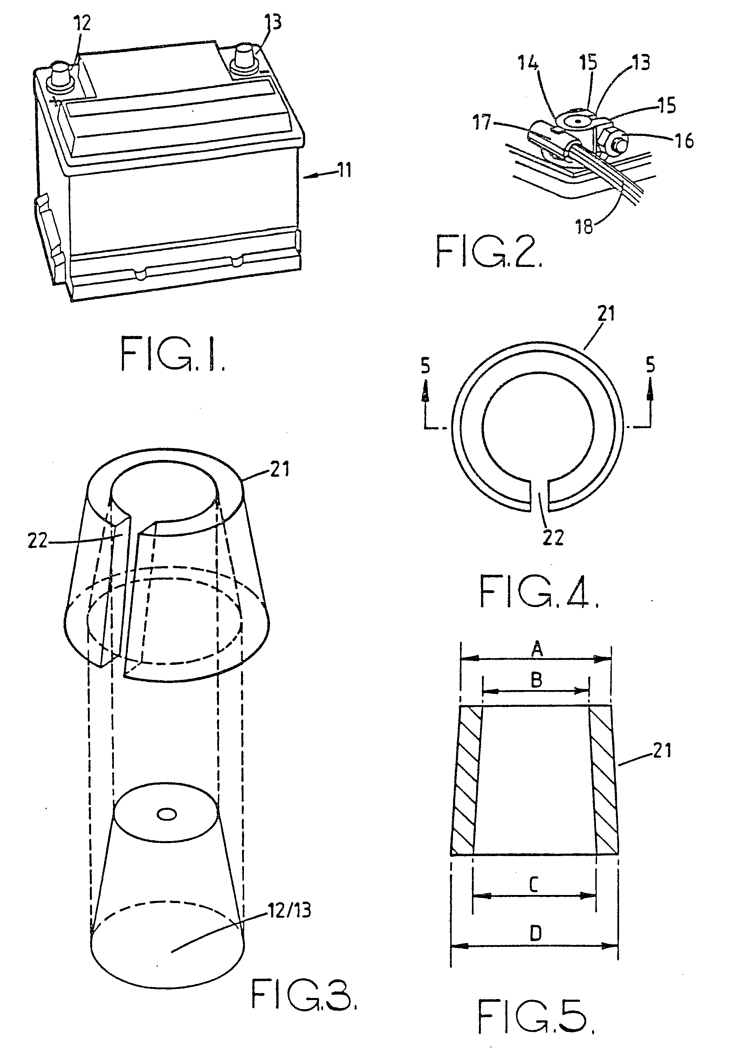

Referring to the drawings it will be seen that the electric storage battery of Figure 1 is of completely conventional form, and includes positive and negative terminal posts 12, 13 extending from opposite ends of the upper face of the battery. The terminal posts are formed from lead, and are of frusto-conical form with their largest diameter adjacent the top face of the battery.

Figure 2 shows one form of connector for engagement with a terminal post of the kind shown in Figure 1, although other connector forms are possible. The connector 14 in Figure 2 is a lead alloy collar having an internal size and taper corresponding to that of the terminal post of the battery. The collar is longitudinally split and its walls are extended to form flanges 15 through which a clamping bolt 16 extends. The collar has an integral boss 17 to which a lead 18 of high current capacity is connected. The collar is placed over a battery terminal post and a nut is tightened along the length of the bolt 16 to clamp the collar around the post and thereby effect a good electrical connection.

It will be recognised that connectors of the kind illustrated in Figure 2 form part of the electrical system of a vehicle and thus a battery to be used with the vehicle must have terminal posts of the appropriate size and shape.

For safety it is usual for the positive and negative terminal posts to be of different diameters so that the negative connector can not be engaged with the positive terminal post.

Currently two basic standards exist, the "Japanese" standard and the "European" standard. The "European" standard uses terminal posts of larger diameter than the "Japanese" standard although their taper angles and overall length (from root to free end) are the same. Thus by way of example the following dimensions could apply. All of the terminal posts would be 17mm in overall length but under the "Japanese" standard the positive terminal post would have a root diameter of 14.59mm and a free end diameter of 12.70mm and a negative terminal post would have a root diameter of 12.99mm and a free end diameter of 11.10mm. For the same taper angle and overall length a "European" standard battery would have a positive terminal post with a root diameter of 19.55mm and a free end diameter of 17.67mm and a negative terminal post with a root diameter of 17.98mm and a free end diameter of 16.10mm.

In accordance with the example of the invention illustrated in Figures 3, 4 and 5, in order to avoid the manufacture of two batteries which differ only in terminal post size, only one battery is produced, and the terminal posts 12, 13 are produced in accordance with the "Japanese" standard, that is to say too small to suit the "European" standard connectors. However, each terminal post is equipped with an adaptor sleeve, it being recognised that the adaptor sleeves for positive terminals are of a different size to the adaptor sleeves for negative terminals. Each adaptor sleeve 21 is of the same overall length as the terminal post, (17.00mm in the example given above) and each has an internal shaping corresponding to the exterior of a "Japanese" terminal post and an external shaping corresponding to the exterior of a "European" terminal post. Thus fitting a positive adaptor sleeve over a positive terminal post of "Japanese" standard produces a terminal post/adaptor sleeve combination which is effectively a terminal post of "European" standard. Similarly fitting a negative "Japanese" standard terminal post with an appropriate adaptor sleeve produces effectively a "European" standard negative terminal post. Each adaptor sleeve 21 is longitudinally split at 22 to permit expansion of the sleeve to facilitate removal of the sleeve from its respective terminal post. When a battery is supplied it will be supplied with the sleeves 21 in position, and thus will be supplied to "European" standard. However, if it is desired to use the battery in conjunction with connectors 14 of "Japanese" standard then all that is necessary is to remove the sleeves 21 from the battery terminal posts. A tool such as a screwdriver can be used for this purpose, the screwdriver blade being inserted into the longitudinal split 22, and then being rotated to expand the sleeve 21 to facilitate removal of the sleeve from the terminal post.

Should it be desired to refit the adaptor sleeves 21 then they are simply placed over their respective terminal posts and will be clamped firmly in position when clamping the appropriate connectors 14 around the adaptor sleeve/terminal post combination. Thus the clamping action of the respective connector 14 ensures a good electrical connection between the connector 14 and the sleeve 21 and between the sleeve 21 and the appropriate terminal post 12, 13. Figure 5 illustrates four dimensions identified as A, B, C and D respectively. Given the terminal sizes set out above then for a positive adaptor sleeve dimension A will be 17.67mm, dimension B will be 12.70mm, dimension C will be 14.59mm and dimension D will be 19.55mm. Correspondingly, for a negative adaptor sleeve dimension A will be 16.10mm, dimension B will be 11.10mm, dimension C will be 12.99mm and dimension D will be 17.98mm.

In the example described above the posts of different dimensions have a common taper angle. It is to be recognised that should a situation arise where the posts to be accommodated have different taper angles, or where one post is tapered and the other (the post to be simulated) is cylindrical, or vice versa, then suitable adaptor sleeves can be provided.

As an alternative to connectors 14 as illustrated, the so called "top-hat" type of connector (or terminal) could be used, the internal taper of the "top-hat" terminal achieving the necessary clamping action as the terminal is secured to its post (or post plus adaptor sleeve) by the usual axially extending screw passing through the crown of the "top hat" connector and into an axial bore in the battery post.

CLAIMS.

1.    An electric storage battery (11) having output terminals (12, 13) in the form of posts and conforming with a first predetermined dimensional standard, the battery being charactorized in that said terminals (12, 13) are equipped with removable, electrically conductive, adapator sleeves (21) which, when in place on said terminal posts (12, 13), define with the posts (12, 13) battery output terminals conforming to a second predetermined dimensional standard.

2.    A battery as claimed in claim 1 charactorized in that each adaptor sleeve (21) is formed with a longitudinally extending split (22) to allow the sleeve (21) to be expanded to facilitate removal of the sleeve from the respective terminal post (12, 13).

3.    A battery terminal post adaptor sleeve (21) formed from electrically conductive material and having internal dimensions corresponding to the external dimensions of a battery terminal post (12, 13) in accordance with a first dimensional standard, whereby the sleeve (21) can be fitted onto a terminal post (12, 13) in accordance with said first standard, and the sleeve (21) having external dimensions corresponding to those of a terminal post (12, 13) in accordance with a second predetermined dimensional standard.

4.    A sleeve as claimed in claim 3 charactorized by being longitudinally split to faciliate removal of the sleeve (21) from a battery terminal post (12, 13) in use.

5.    A vehicle electrical system charactorized by incorporating a battery as claimed in anyone of claims 1 to 3 together with battery terminal connectors (14) electrically connected to respective electrical leads
(18), said connectors (14) being engaged with
respective output terminals (12/21, 13/21) of the
battery.

FIG.1.

FIG.2.

FIG.3.

FIG.4.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-1 687 262 (V.V. VAUGHN) * Figures 1-3; claims 1,5; column 1, lines 1-22,4451,62-79 * | 1-5 | H 01 R 11/28 H 01 M 2/30 |
| | --- | | |
| X | FR-A-2 348 586 (ACCUMULATORENWERK HOPPECKE CARL ZOELLNER & SOHN) * Claim 1; figures 1,2; page 1, lines 4-13 * | 1,3,5 | |
| | --- | | |
| A | US-A-2 860 319 (B.M. SHORT) | | |
| | --- | | |
| A | US-A-1 759 043 (N.L. DERBY) | | |
| | --- | | TECHNICAL FIELDS SEARCHED (Int Cl 4) |
| A | US-A-2 589 122 (A. OLSON) | | H 01 R H 01 M |
| | ----- | | |

The present search report has been drawn up for all claims

| Place of search | Date of completion of the search | Examiner |
|---|---|---|
| THE HAGUE | 02-09-1987 | D'HONDT J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82